# FASCICULE DE BREVET EUROPEEN

(11) **EP 2 562 903 B1**
(45) Date de publication et mention de la délivrance du brevet: **10.08.2016**
(21) Numéro de dépôt: 12181266.3
(22) Date de dépôt: 21.08.2012
(51) Int. Cl.: H02J 3/18, H02M 7/487, H02M 7/537

(54) **Compensateur d'énergie réactive comprenant N onduleurs en parallèle, N bancs de condensateur(s) et des moyens de connexion des bancs au travers de composants électriques passifs**
Reaktionsenergiekompensator, der n Parallel-Wechselrichter, n Kondensatorbänke und Anschlussmittel für die Kondensatorbänke über passive elektrische Komponenten umfasst
Reactive power compensator comprising N inverters in parallel, N banks of capacitor(s) and a means for connecting the banks via passive electrical components

(30) Priorité: 25.08.2011 FR 1157528
(43) Date de publication de la demande: 27.02.2013
(73) Titulaire: GE Energy Power Conversion Technology Ltd, Rugby Warwickshire CV21 1BU (GB)
(72) Inventeur: Pouliquen, Jean-Louis, 90000 Belfort (FR); Morati, Mathieu, 90000 Belfort (FR); Urbain, Mathieu, 90000 Belfort (FR); Lapassat, Nicolas, 91140 Villebon-sur-Yvette (FR)
(74) Mandataire: Serjeants LLP

(56) Documents cités:
- FR-A1- 2 766 635
- JP-A- 2004 072 864
- US-A- 3 963 978
- US-A- 4 647 837
- US-A- 5 617 012
- US-B1- 6 225 791

## Description

La présente invention concerne un compensateur d'énergie réactive propre à être relié électriquement à un réseau électrique alternatif comportant M phase(s), M étant un nombre entier supérieur ou égal à 1, le compensateur comprenant :
- M bornes de connexion au réseau alternatif,
- N bancs de condensateur(s) propres à fournir de l'énergie réactive, N étant un nombre entier supérieur ou égal à 2,
- N onduleurs de tension bidirectionnels, connectés en parallèle les uns des autres et reliés chacun à un banc de condensateur(s) propre, chaque onduleur étant apte à convertir un courant continu en un courant alternatif comportant M phase(s) dans un sens et le courant alternatif en le courant continu dans l'autre sens, chaque onduleur comportant une première et une deuxième bornes d'entrée et M borne(s) de sortie, les bornes d'entrée étant connectées au banc de condensateur(s) correspondant, chaque borne de sortie correspondant à une phase du courant alternatif et étant reliée à une borne de connexion correspondante,
- un dispositif d'équilibrage de la tension des N bancs de condensateur(s).

On connaît du document FR 2 766 635 A1, publié le 29 janvier 1999, un compensateur d'énergie réactive du type précité. Le compensateur d'énergie réactive comprend des onduleurs polyphasés connectés en parallèle les uns des autres, chaque onduleur étant bidirectionnel, connecté électriquement en entrée à un banc de condensateur(s) propre fournissant de l'énergie réactive et relié électriquement en sortie au réseau alternatif. Un tel compensateur d'énergie réactive permet de réduire les éventuelles perturbations du réseau alternatif dues à une charge perturbatrice connectée au réseau, telle qu'un four à arc. Le compensateur comprend des moyens de commande pour le pilotage des onduleurs de tension suivant une loi de commande, et l'équilibrage de la tension de chaque banc de condensateur(s) est réalisé par l'intermédiaire du pilotage des onduleurs de tension.

Toutefois, lorsque les perturbations du réseau alternatif sont importantes, le pilotage par les moyens de commande des onduleurs de tension ne permet plus de réaliser l'équilibrage de la tension de chaque banc de condensateur(s). Des déséquilibres de tension apparaissent alors entre les différents bancs de condensateur(s), ce qui engendre alors une divergence des tensions des différents bancs de condensateur(s), et nécessite un arrêt du compensateur d'énergie réactive.

Le but de l'invention est de proposer un compensateur d'énergie réactive permettant d'améliorer l'équilibrage de la tension des bancs de condensateur(s) en cas de perturbations dues à une charge connectée au réseau alternatif.

A cet effet, l'invention a pour objet un compensateur d'énergie réactive du type précité, caractérisé en ce que le dispositif d'équilibrage comporte des premiers moyens de connexion électrique des premières bornes d'entrée au travers de composants électriques passifs.

Suivant d'autres aspects avantageux de l'invention, le compensateur d'énergie réactive comprend une ou plusieurs des caractéristiques suivantes, prise(s) isolément ou suivant toutes les combinaisons techniquement possibles :
- le dispositif d'équilibrage comporte des deuxièmes moyens de connexion électrique des deuxièmes bornes d'entrée au travers de composants électriques passifs ;
- les moyens de connexion sont constitués de composants électriques passifs ;
- les moyens de connexion présentent une impédance supérieure ou égale à 10 ohms, de préférence supérieure ou égale à 15 ohms ;
- les premiers moyens de connexion comportent N premières résistances, chaque première résistance présentant deux extrémités et étant connectée par une extrémité à une première borne d'entrée correspondante et par l'autre extrémité à un premier point commun ;
- les premiers moyens de connexion comportent N-1 premières résistances, chaque première résistance étant connectée entre les premières bornes d'entrée de deux onduleurs successifs ;
- les premiers moyens de connexion comportent en outre une première bobine électromagnétique connectée en série de la première résistance ;
- les deuxièmes moyens de connexion comportent N deuxièmes résistances, chaque deuxième résistance présentant deux extrémités et étant connectée par une extrémité à une deuxième borne d'entrée correspondante et par l'autre extrémité à un deuxième point commun ;
- les deuxièmes moyens de connexion comportent N-1 deuxièmes résistances, chaque deuxième résistance étant connectée entre les deuxièmes bornes d'entrée de deux onduleurs successifs ;
- les deuxièmes moyens de connexion comportent en outre une deuxième bobine électromagnétique connectée en série de la deuxième résistance ;
- le compensateur comprend un dispositif électromagnétique de couplage connecté entre les bornes de sortie des N onduleurs et la ou les borne(s) de connexion.

Les caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'un compensateur d'énergie réactive selon un premier mode de réalisation de l'invention, et
- la figure 2 est une vue analogue à celle de la figure 1 selon un deuxième mode de réalisation de l'invention.

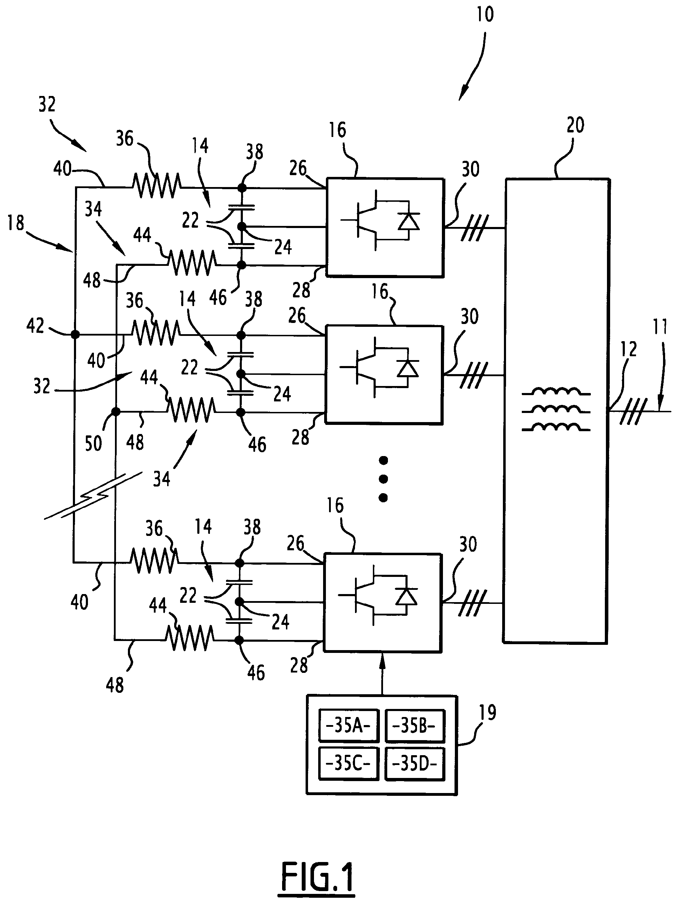

La figure 1 illustre un compensateur d'énergie réactive 10 propre à être relié électriquement à un réseau électrique alternatif 11 comportant M phase(s), M étant un nombre entier supérieur ou égal à 1.

Le compensateur d'énergie réactive 10 comprend M bornes 12 de connexion au réseau alternatif 11, N bancs de condensateur(s) 14 et N onduleur de tension 16 connectés en parallèle les uns des autres et reliés chacun à un banc de condensateur(s) 14 propre, chaque onduleur 16 comportant des interrupteurs électroniques commandables à l'ouverture et à la fermeture pour la conversion de la tension. N est un nombre entier supérieur ou égal à 2.

Le compensateur d'énergie réactive 10 comprend un dispositif 18 d'équilibrage de la tension des N bancs de condensateur(s) et un dispositif 19 de calcul de signaux de commande des interrupteurs électroniques des onduleurs 16.

En complément, le compensateur d'énergie réactive 10 comprend un dispositif électromagnétique de couplage 20 connecté en sortie des N onduleurs de tension 16.

Le compensateur d'énergie réactive 10 est propre à compenser les variations d'énergie réactive sur le réseau alternatif 11 via les bancs de condensateur(s) 14 propres à fournir de l'énergie réactive au réseau 11.

Dans l'exemple de réalisation de la figure 1, M est égal à 3, et le réseau électrique alternatif 11 est un réseau triphasé.

Chaque borne de connexion 12 correspond à une phase du courant alternatif du réseau.

Les N bancs de condensateur(s) 14 sont distincts les uns des autres. Chaque banc 14 comporte deux condensateurs 22 connectés en série et reliés entre eux par un point milieu 24.

Il est précisé que, dans la suite de la description, le côté des onduleurs 16 connecté au banc de condensateur(s) 14 correspond, par convention, à l'entrée de l'onduleur, et que le côté des onduleurs 16 relié au réseau alternatif 11 correspond alors à la sortie de l'onduleur.

Chaque onduleur 16 est bidirectionnel et apte à convertir un courant continu en un courant alternatif comportant M phase(s) dans un sens et le courant alternatif en le courant continu dans l'autre sens.

Chaque onduleur 16 comporte une première borne d'entrée 26, une deuxième borne d'entrée 28 et N borne(s) de sortie 30, les bornes d'entrée 26, 28 étant connectées à un banc de condensateur(s) 14 propre, chaque borne de sortie 30 correspondant à une phase du courant alternatif.

Chaque onduleur de tension 16 est connu en soi, et présente une topologie du type clampé par le neutre, également appelé NPC (de l'anglais *Neutrai Point Clamped*). En variante, chaque onduleur de tension 16 présente une topologie du type piloté par le neutre, également appelé topologie NPP (de l'anglais *Neutrai Point Piloted*).

Le dispositif d'équilibrage 18 comporte des premiers moyens 32 de connexion électrique des premières bornes d'entrée 26.

En complément, le dispositif d'équilibrage 18 comporte des deuxièmes moyens 34 de connexion électrique des deuxièmes bornes d'entrée 28.

Le dispositif de calcul 19 comporte, pour chaque onduleur 16, un organe 35A de détermination d'un signal de porteuse, un organe 35B de calcul d'un signal de modulante, et des moyens 35C de calcul des signaux de commande en fonction de la différence entre le signal de porteuse et le signal de modulante. En complément, le dispositif de calcul 19 comporte en outre des moyens 35D de décalage temporel des signaux de porteuse d'au moins deux onduleurs 16 correspondants. Dans l'exemple de réalisation de la figure 1, les moyens de décalage temporel 35D sont des moyens de décalage temporel des signaux de porteuse de tous les onduleurs 16. Le décalage temporel entre les signaux de porteuse de deux onduleurs 16 successifs est, par exemple, égal à 2 x π / N.

Le dispositif électromagnétique de couplage 20 est connecté entre les bornes de sortie 30 des N onduleurs et les trois bornes de connexion 12 correspondant à chacune des phases du courant triphasé du réseau 11.

Le dispositif électromagnétique de couplage 20 est connu en soi, et comporte N x M premières bobines électromagnétiques de couplage, N x M deuxièmes bobines électromagnétiques de couplage et N x M noyaux magnétiques, non représentés. Chaque bobine électromagnétique est enroulée autour d'un noyau respectif, et les deuxièmes bobines électromagnétiques de couplage sont reliées aux premières bobines électromagnétiques de couplage de la manière décrite dans le document FR 2 940 550 A1.

Les condensateurs 22 sont, par exemple, identiques et de même capacité.

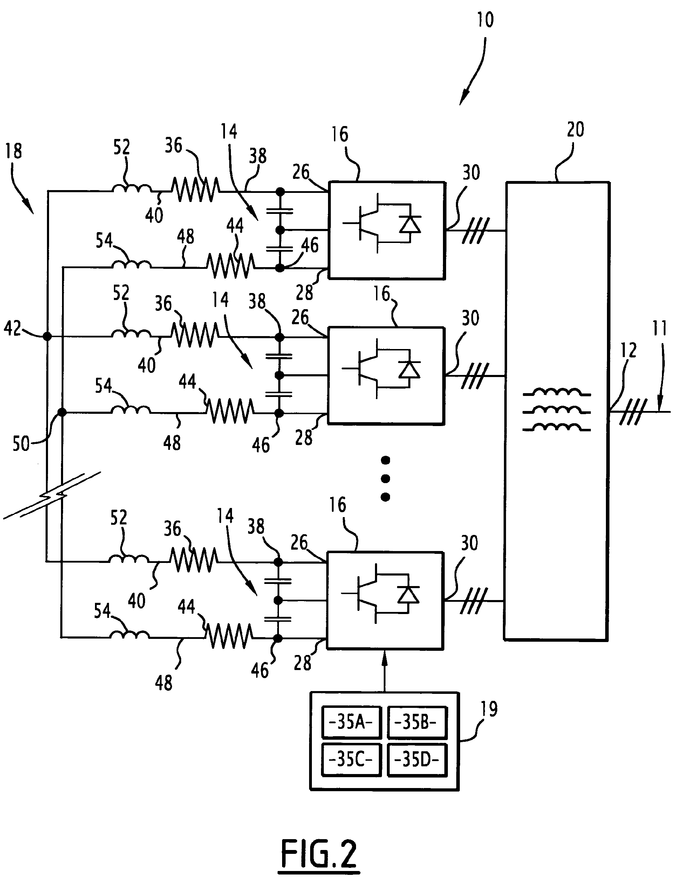

Les premiers et seconds moyens de connexion 32, 34 comportent des composants électriques passifs. Dans l'exemple de réalisation des figures 1 et 2, les premiers et seconds moyens de connexion 32, 34 sont constitués de composants électriques passifs.

Les premiers moyens de connexion 32 comportent N premières résistances 36, chaque première résistance 36 présentant deux extrémités 38, 40 et étant connectée par une extrémité 38 à une première borne d'entrée 36 correspondante et par l'autre extrémité 40 à un premier point commun 42. Dans l'exemple de réalisation de la figure 1, les premiers moyens de connexion 32 sont constitués des N premières résistances 36.

En variante non représentée, les premiers moyens de connexion 32 comportent N-1 première(s) résistance(s), chaque première résistance étant connectée entre les premières bornes d'entrée 26 de deux onduleurs 16 successifs. Les premiers moyens de connexion sont, par exemple, constitués des N-1 premières résistances.

Les deuxièmes moyens de connexion 34 comportent N deuxièmes résistances 44, chaque deuxième résistance 44 présentant deux extrémités 46, 48 et étant connectée par une extrémité 46 à une deuxième borne d'entrée 28 correspondante et par l'autre extrémité 48 à un deuxième point commun 50. Dans l'exemple de réalisation de la figure 1, les deuxièmes moyens de connexion 34 sont constitués des N deuxièmes résistances 44.

En variante non représentée, les deuxièmes moyens de connexion 34 comportent N-1 deuxième(s) résistance(s), chaque deuxième résistance étant connectée entre les deuxièmes bornes d'entrée 28 de deux onduleurs 16 successifs. Les deuxièmes moyens de connexion 34 sont, par exemple, constitués des N-1 deuxièmes résistances.

Chaque première résistance 36 présente une première impédance R1 de valeur supérieure ou égale à 10 ohms, de préférence supérieure ou égale à 15 ohms. La valeur de la première impédance R1 des premières résistances 36 est, par exemple, comprise entre 10 ohms et 60 ohms, de préférence comprise entre 15 ohms et 50 ohms, de préférence encore égale à 15 ohms ou à 48 ohms.

Chaque deuxième résistance 44 présente une deuxième impédance R2 de valeur supérieure ou égale à 10 ohms, de préférence supérieure ou égale à 15 ohms. La valeur de la deuxième impédance R2 des deuxièmes résistances 44 est, par exemple, comprise entre 10 ohms et 60 ohms, de préférence comprise entre 15 ohms et 50 ohms, de préférence encore égale à 15 ohms ou à 48 ohms.

Dans l'exemple de réalisation de la figure 1, la valeur de la deuxième impédance R2 est égale à celle de la première impédance R1. La valeur des impédances R1, R2 est, par exemple, égale à 15 ohms pour des onduleurs 16 avec une tension de 3,3 kV entre phases et des bancs de condensateur(s) 14 avec une tension de 5 kV à leurs bornes. En variante, la valeur des impédances R1, R2 est égale à 48 ohms pour des onduleurs 16 avec une tension de 9,9 kV entre phases et des bancs de condensateur(s) 14 avec une tension de 15 kV à leurs bornes.

Le fonctionnement du compensateur d'énergie réactive 10 va désormais être expliqué à l'aide de la figure 1.

Lorsque des perturbations apparaissent sur le réseau alternatif 11 et que la tension aux bornes de chaque banc de condensateur(s) 14 n'est plus sensiblement identique d'un onduleur 16 à l'autre, malgré le pilotage des onduleurs 16 par l'intermédiaire du dispositif de calcul 19, alors les premiers moyens de connexion électrique 32, voire en complément les deuxièmes moyens de connexion électrique 34, réduisent les déséquilibres de tension en assurant une circulation des charges électriques depuis un banc 14 en excès de charges électriques vers un banc 14 en défaut de charges électriques. Autrement dit, la présence des moyens de connexion électrique 32, 34 permet d'améliorer l'équilibrage de la tension des bancs de condensateur(s) 14 en cas de perturbations dues à une charge connectée au réseau alternatif 11.

La constante de temps de la régulation de la tension des bancs de condensateur(s) 14 est fonction de la valeur des impédances R1, R2 des résistances 36, 44.

Pour déterminer la valeur des impédances R1, R2, le courant maximal de déséquilibre I_{déséquilibre} est estimé par simulation, et une valeur prédéterminée de divergence maximale de tension autorisée ΔVₘₐₓ est choisie. La valeur maximale de la somme des impédances (R1+R2)ₘₐₓ est alors donnée par l'équation suivante :

(R1+R2)ₘₐₓ = R1ₘₐₓ + R2ₘₐₓ = ΔVₘₐₓ / I_{déséquilibre} (1)

Pour ΔVₘₐₓ = 150 V et I_{déséquilibre} = 2,5 A, on obtient R1ₘₐₓ + R2ₘₐₓ = 60 ohms. En choisissant R1 égal à R2, et en prenant un facteur 2 de marge par rapport aux valeurs maximales, on trouve alors une valeur des impédances R1, R2 égale à 15 ohms.

En outre, les pertes joules associées aux courants d'équilibrage sont limitées, puisque avec des impédances R1, R2 de valeur égale, par exemple, à 15 ohms, le courant continu d'équilibrage ne dépasse pas 3A crête pour six onduleurs 16 connectés en parallèle.

Ainsi, l'utilisation de composants électriques passifs, tels que les premières résistances 36 et les deuxièmes résistances 44, permet l'équilibrage de la tension de N bancs de condensateur(s) 14 dans le compensateur d'énergie réactive 10, les composants électriques passifs formant des moyens de connexion électrique des N premières bornes d'entrée 26 et des N deuxièmes bornes d'entrée 28.

La figure 2 illustre un deuxième mode de réalisation de l'invention pour lequel les éléments analogues au premier mode de réalisation, décrits précédemment, sont repérés par des références identiques, et ne sont pas décrits à nouveau.

Selon le deuxième mode de réalisation, les premiers moyens de connexion 32 comportent en outre une première bobine électromagnétique 52 connectée en série d'au moins une première résistance 36.

Dans l'exemple de réalisation de la figure 2, les premiers moyens de connexion 32 comportent une première bobine électromagnétique 52 connectée en série de chaque première résistance 36.

Dans l'exemple de réalisation de la figure 2, les premiers moyens de connexion 32 sont constitués de N premières résistances 36 et de N premières bobines électromagnétiques 52.

En variante non représentée, lorsque les premiers moyens de connexion 32 comportent des premières résistances connectées entre les premières bornes d'entrée 26 de deux onduleurs 16 successifs, les premiers moyens de connexion 32 sont constitués de N-1 premières résistances et de N-1 premières bobines électromagnétiques.

En complément, les deuxièmes moyens de connexion 34 comportent en outre une deuxième bobine électromagnétique 54 connectée en série d'au moins une deuxième résistance 44.

Les deuxièmes moyens de connexion 34 comportent, par exemple, une deuxième bobine électromagnétique 54 connectée en série de chaque deuxième résistance 44.

Dans l'exemple de réalisation de la figure 2, les deuxièmes moyens de connexion 34 sont constitués de N deuxièmes résistances 44 et de N deuxièmes bobines électromagnétiques 54.

En variante non représentée, lorsque les deuxièmes moyens de connexion 34 comportent des deuxièmes résistances connectées entre les deuxièmes bornes d'entrée 28 de deux onduleurs 16 successifs, les deuxièmes moyens de connexion 34 sont constitués de N-1 deuxièmes résistances et de N-1 deuxièmes bobines électromagnétiques.

Le fonctionnement de ce deuxième mode de réalisation est analogue à celui du premier mode de réalisation.

Les avantages de ce deuxième mode de réalisation sont analogues à ceux du premier mode de réalisation.

Lorsque les signaux de porteuse sont décalés temporellement entre les onduleurs 16 de par les moyens de décalage 35 D, des courants alternatifs additionnels apparaissent à des fréquences multiples de la fréquence de porteuse. Ces courants sont susceptibles d'engendrer des pertes additionnelles supérieures aux pertes par effet Joule engendrées par les courants continus d'équilibrage. Les premières bobines électromagnétiques 52, voire en complément les deuxièmes bobines électromagnétiques 54, permettent alors d'amortir ces courants alternatifs additionnels, et donc de réduire les pertes additionnelles. En outre, les bobines électromagnétiques 52, 54 sont des éléments non dissipatifs, et n'augmentent donc pas les pertes par effet Joule.

On conçoit ainsi que le compensateur d'énergie réactive selon l'invention permet d'améliorer l'équilibrage de la tension des N bancs de condensateur(s) 14, notamment en cas de perturbations du courant alternatif du réseau dues à la présence d'une charge perturbatrice connectée au réseau alternatif 11.

## Revendications

1. Compensateur (10) d'énergie réactive propre à être relié électriquement à un réseau électrique alternatif (11) comportant M phase(s), M étant un nombre entier supérieur ou égal à 1, le compensateur (10) comprenant :
- M bornes (12) de connexion au réseau alternatif (11),
- N bancs de condensateur(s) (14) propres à fournir de l'énergie réactive, N étant un nombre entier supérieur ou égal à 2,
- N onduleurs de tension (16) bidirectionnels, connectés en parallèle les uns des autres et reliés chacun à un banc de condensateur(s) (14) propre, chaque onduleur (16) étant apte à convertir un courant continu en un courant alternatif comportant M phase(s) dans un sens et le courant alternatif en le courant continu dans l'autre sens, chaque onduleur (16) comportant une première (26) et une deuxième (28) bornes d'entrée et M borne(s) de sortie (30), les bornes d'entrée (26, 28) étant connectées au banc de condensateur(s) (14) correspondant, chaque borne de sortie (30) correspondant à une phase du courant alternatif et étant reliée à une borne de connexion (12) correspondante,
- un dispositif (18) d'équilibrage de la tension des N bancs de condensateur(s), **caractérisé en ce que** le dispositif d'équilibrage (18) comporte des premiers moyens (32) de connexion électrique des premières bornes d'entrée (26) au travers de composants électriques passifs (36, 52).

2. Compensateur (10) selon la revendication 1, dans lequel le dispositif d'équilibrage (18) comporte des deuxièmes moyens (34) de connexion électrique des deuxièmes bornes d'entrée (28) au travers de composants électriques passifs (44, 54).

3. Compensateur (10) selon la revendication 1 ou 2, dans lequel les moyens de connexion (32, 34) sont constitués de composants électriques passifs (36, 44, 52, 54).

4. Compensateur (10) selon l'une quelconque des revendications précédentes, dans lequel les moyens de connexion (32, 34) présentent une impédance supérieure ou égale à 10 ohms, de préférence supérieure ou égale à 15 ohms.

5. Compensateur (10) selon l'une quelconque des revendications précédentes, dans lequel les premiers moyens de connexion (32) comportent N premières résistances (36), chaque première résistance (36) présentant deux extrémités (38, 40) et étant connectée par une extrémité (38) à une première borne d'entrée (26) correspondante et par l'autre extrémité (40) à un premier point commun (42).

6. Compensateur (10) selon l'une quelconque des revendications 1 à 4, dans lequel les premiers moyens de connexion (32) comportent N-1 premières résistances, chaque première résistance étant connectée entre les premières bornes d'entrée (26) de deux onduleurs (16) successifs.

7. Compensateur (10) selon la revendication 5 ou 6, dans lequel les premiers moyens de connexion (32) comportent en outre une première bobine électromagnétique (52) connectée en série de la première résistance (36).

8. Compensateur (10) selon l'une quelconque des revendications 2 à 7, dans lequel les deuxièmes moyens de connexion (34) comportent N deuxièmes résistances (44), chaque deuxième résistance (44) présentant deux extrémités (46, 48) et étant connectée par une extrémité (46) à une deuxième borne d'entrée (28) correspondante et par l'autre extrémité (48) à un deuxième point commun (50).

9. Compensateur (10) selon l'une quelconque des revendications 2 à 7, dans lequel les deuxièmes moyens de connexion (34) comportent N-1 deuxièmes résistances, chaque deuxième résistance étant connectée entre les deuxièmes bornes d'entrée (28) de deux onduleurs (16) successifs.

10. Compensateur (10) selon la revendication 8 ou 9, dans lequel les deuxièmes moyens de connexion (34) comportent en outre une deuxième bobine électromagnétique (54) connectée en série de la deuxième résistance (44).

11. Compensateur (10) selon l'une quelconque des revendications précédentes, dans lequel le compensateur comprend un dispositif électromagnétique de couplage (20) connecté entre les bornes de sortie (30) des N onduleurs (16) et la ou les borne(s) de connexion (12).

## Patentansprüche

1. Blindleistungskompensator (10), der dazu eingerichtet ist, elektrisch mit einem elektrischen Wechselspannungsnetz (11) aufweisend M Phase(n) verbunden zu werden, wobei M eine Anzahl größer oder gleich 1 ist, wobei der Kompensator (10) aufweist:
- M Anschlüsse (12) zur Verbindung mit dem Wechselspannungsnetz (11),
- N Kondensatorbänke (14), die dazu eingerichtet sind, Blindleistung bereitzustellen, wobei N eine Anzahl gleich oder größer als 2 ist,
- N bidirektionale Wechselspannungsrichter (16), die parallel zueinander geschaltet und jeweils mit einer Kondensatorbank (14) verbunden sind, wobei jeder Wechselrichter (16) dazu geeignet ist, einen Gleichstrom in einen Wechselstrom mit M Phase(n) in eine Richtung zu wandeln und den Wechselstrom in den Gleichstrom in die andere Richtung zu wandeln, wobei jeder Wechselrichter (16) einen ersten (26) und einen zweiten (28) Eingangsanschluss und M Ausgangsanschluss bzw. Ausgangsanschlüsse (30) aufweist, wobei die Eingangsanschlüsse (26, 28) mit der entsprechenden Kondensatorbank (14) verbunden sind, wobei jeder Ausgangsanschluss (30) einer Phase des Wechselstromes entspricht und mit einem entsprechenden Verbindungsanschluss (12) verbunden ist,
- eine Ausgleichseinrichtung (18) für die Spannung der N Kondensatorbänke,
**dadurch gekennzeichnet, dass** die Ausgleichseinrichtung (18) erste Mittel (32) zur elektrischen Verbindung der ersten Eingangsanschlüsse (26) über passive elektrische Bauteile (36, 52) aufweist.

2. Kompensator (10) nach Anspruch 1, bei dem die Ausgleichseinrichtung (18) zweite Mittel (34) zur elektrischen Verbindung der zweiten Eingangsanschlüsse (28) über passive elektrische Bauteile (44, 54) aufweist.

3. Kompensator (10) nach Anspruch 1 oder 2, bei dem die Mittel zur Verbindung (32, 34) durch die passiven elektrischen Bauteile (36, 44, 52, 54) gebildet sind.

4. Kompensator (10) nach irgendeinem der vorhergehenden Ansprüche, bei dem die Mittel zur Verbindung (32, 34) eine Impedanz bereitstellen, die größer oder gleich 10 Ohm ist, vorzugsweise größer oder gleich 15 Ohm.

5. Kompensator (10) nach irgendeinem der vorhergehenden Ansprüche, bei dem die ersten Mittel zur Verbindung (32) N erste Widerstände (36) aufweisen, wobei jeder erste Widerstand (36) zwei Enden (38, 40) aufweist und mittels eines Endes (38) mit einem entsprechenden ersten Eingangsanschluss (26) und mit dem anderen Ende (40) mit einem ersten gemeinsamen Punkt (42) verbunden ist.

6. Kompensator (10) nach irgendeinem der Ansprüche 1 bis 4, bei dem die ersten Mittel zur Verbindung (32) N-1 erste Widerstände aufweisen, wobei jeder erste Widerstand zwischen die ersten Eingangsanschlüsse (26) von zwei aufeinanderfolgenden Wechselrichtern (16) geschaltet ist.

7. Kompensator (10) nach Anspruch 5 oder 6, bei dem die ersten Mittel zur Verbindung (32) außerdem eine erste elektromagnetische Spule (52) aufweisen, die in Reihe zu dem ersten Widerstand (36) geschaltet ist.

8. Kompensator (10) nach irgendeinem der Ansprüche 2 bis 7, bei dem die zweiten Mittel zur Verbindung (34) N zweite Widerstände (44) aufweisen, wobei jeder zweite Widerstand (44) zwei Enden (46, 48) aufweist und mit einem Ende (46) mit einem entsprechenden zweiten Eingangsanschluss (28) und mit dem anderen Ende (48) mit einem zweiten gemeinsamen Punkt (50) verbunden ist.

9. Kompensator (10) nach irgendeinem der Ansprüche 2 bis 7, bei dem die zweiten Mittel zur Verbindung (34) N-1 zweite Widerstände aufweisen, wobei jeder zweite Widerstand zwischen zwei zweite Eingangsanschlüsse (28) von zwei aufeinanderfolgenden Wechselrichtern (16) geschaltet ist.

10. Kompensator (10) nach Anspruch 8 oder 9, bei dem die zweiten Mittel zur Verbindung (34) außerdem eine zweite elektromagnetische Spule (54) aufweisen, die in Reihe mit dem zweiten Widerstand (44) geschaltet ist.

11. Kompensator (10) nach irgendeinem der vorhergehenden Ansprüche, bei dem der Kompensator eine elektromagnetische Koppeleinrichtung (20) aufweist, die zwischen die Ausgangsanschlüsse (30) der N Wechselrichter (16) und den oder die Verbindungsanschlüsse (12) geschaltet ist.

## Claims

1. Reactive energy compensator (10) able to be electrically connected to an alternating current electrical network (11) comprising M phase(s), M being an integer greater than or equal to 1, the compensator (10) comprising:
- M terminals (12) for connection to the alternating network (11),
- N banks of condenser(s) (14) able to provide reactive energy, N being an integer greater than or equal to 2,
- N bidirectional voltage converters (16) connected in parallel with each other and each connected to an individual bank of condenser(s) (14), each converter (16) being able to convert a continuous current into an alternating current comprising M phase(s) in one direction and the alternating current into the continuous current in the other direction, each converter (16) comprising a first (26) and a second (28) input terminals and M output terminal(s) (30), the input terminals (26, 28) being connected to the corresponding bank of condenser(s) (14), each output terminal (30) corresponding to one phase of the alternating current and being connected to a corresponding connection terminal (12),
- a device (18) for balancing the voltage of the N banks of condenser(s), **characterized in that** the balancing device (18) comprises first means (32) for electrical connection of the first input terminals (26) through passive electrical components (36, 52).

2. Compensator (10) according to claim 1, wherein the balancing device (18) comprises second means (34) for electrical connection of the second input terminals (28) through passive electrical components (44, 54).

3. Compensator (10) according to claim 1 or 2, wherein the connection means (32, 34) consist of passive electrical components (36, 44, 52, 54).

4. Compensator (10) according to any of the preceding claims, wherein the connection means (32, 34) have an impedance greater than or equal to 10 ohms, preferably greater than or equal to 15 ohms.

5. Compensator (10) according to any of the preceding claims, wherein the first connection means (32) comprise N first resistors (36), each first resistor (36) having two ends (38, 40) and being connected by one end (38) to a corresponding first input terminal (26) and by the other end (40) to a first common point (42).

6. Compensator (10) according to any of claims 1 to 4, wherein the first connection means (32) comprise N-1 first resistors, each first resistor being connected between the first input terminals (36) of two successive converters (16).

7. Compensator (10) according to claim 5 or 6, wherein the first connection means (32) also comprise a first electromagnetic coil (52) connected in series with the first resistor (36).

8. Compensator (10) according to any of claims 2 to 7, wherein the second connection means (34) comprise N second resistors (44), each second resistor (44) having two ends (46, 48) and being connected by one end (46) to a corresponding second input terminal (28) and by the other end (48) to a second common point (50).

9. Compensator (10) according to any of claims 2 to 7, wherein the second connection means (34) comprise N-1 second resistors, each second resistor being connected between the second input terminals (28) of two successive converters (16).

10. Compensator (10) according to claim 8 or 9, wherein the second connection means (34) also comprise a second electromagnetic coil (54) connected in series with the second resistor (44).

11. Compensator (10) according to any of the preceding claims, wherein the compensator comprises an electromagnetic coupling device (20) connected between the output terminals (30) of the N converters (16) and the connection terminal(s) (12).
